# EUROPEAN PATENT SPECIFICATION

(11) **EP 2 711 263 B1**
(45) Date of publication and mention of the grant of the patent: **10.08.2016**
(21) Application number: 11865547.1
(22) Date of filing: 16.09.2011
(51) Int. Cl.: B62B 1/04, B62B 1/20, B62B 1/24

(54) **BALANCED LUGGAGE VAN**
AUSGEGLICHENER GEPÄCKWAGEN
CHARIOT À BAGAGES ÉQUILIBRÉ

(30) Priority: 18.05.2011 CN 201110128478; 18.05.2011 CN 201120158042 U
(43) Date of publication of application: 26.03.2014
(73) Proprietor: Zhejiang Hengfeng Top Leisure Co., Ltd., Zhejiang 313200 (CN)
(72) Inventor: YANG, Baoqing, Zhejiang 313200 (CN)
(74) Representative: advotec.
(86) International application number: PCT/CN2011/079736
(87) International publication number: WO 2012/155422

(56) References cited:
- WO-A1-2011/074458
- CN-A- 1 206 380
- CN-U- 88 200 161
- GB-A- 2 466 806
- JP-A- 2004 168 246
- KR-A- 20050 041 292
- KR-A- 20050 041 292
- US-A- 6 079 718
- US-B1- 7 320 470

## Description

### TECHNICAL FIELD

The present application relates to the technical field of luggage carts, and particularly to a balanced two-wheeled luggage cart.

### BACKGROUND

A luggage cart as a man powered handcart is widely used in places such as markets, stations, airports, hotels, due to its advantages of simple structure, easy-handling, time saving and labor saving, and it may also be used to transfer cargoes.

According to structural forms of wheel, the luggage cart can be generally divided into several types, such as a one-wheeled luggage cart, a two-wheeled luggage cart, a three-wheeled luggage cart, and a four-wheeled luggage cart.

KR 2005 0041292 A discloses a balancing apparatus for a cart, including a pair of wheels Wa, Wb, a left supporting rod 20a1, 20a2, a right supporting rod 20b1, 20b2, a connecting frame 10 and a connecting shaft S1 which is inserted into a pair of short sleeves 11 arranged on the connecting frame 10. On an upper end of the left supporting rod 20a1 (or the right supporting rod 20b1), a short sleeve 21a (or 21b) is provided, and the short sleeve 21a (or 21b) together with short sleeves 11 are inserted by the connecting shaft S1, therefore the left supporting rod 20a1 (or the right supporting rod 20b1) is rotatably connected with the connecting frame 10.

WO 2011/074458A1 discloses a two-wheeled barrow, wherein the barrow includes two wheels 14, 15 located at the underside of the front of a loading platform 12 and supported on an axle 16, a bearing 21 is located on the axle 16, two supporting arms 22, 23 descend from the loading platform 12, a connecting shaft 24 spans the interval between the left and right supporting arms 22, 23, and a pivot shaft 27 is inserted into the mounting holes on a first jointing piece 25 of the connecting shaft 24 and a second jointing piece 26 of the bearing 21. Therefore, the supporting arms 22, 23 can incline up to a prescribed angle.

JP2004 168246 A discloses a hand-pushing two-wheel cart, wherein a loading platform rotation prevention board 11 is provided under a loading platform 21, a cart frame 10 is located under the loading platform 21, two wheel supporting rods 15 together with the cart frame 10 form a wheel frame, which is connected with the cart by a rotating shaft 13, and the two supporting rods 15 are supported on a wheel axle 18.

GB 2466806 A discloses a fishing barrow with a variable wheel position.

When carrying a heavy object with a conventional one-wheeled luggage cart, it is labor consuming and also difficult for the user to control the balance of a cart body, and the cart is apt to be tilted and even be rolled over, and when the cart is parked for loading at a place which is not flat enough, the cart may be rolled over when weights of the loaded objects are unbalanced.

Compared to the one-wheeled luggage cart, the two-wheeled luggage cart has a good stability, however a wheel frame thereof is generally directly fixed to a main cart frame, which may cause the following disadvantages.

Since the wheel frame is rigidly connected to the main cart frame, a rotating shaft of wheels is always parallel to a cargo-carrying platform of the main cart frame, and when the luggage cart is used on a bumpy road such as a slope, the cargo-carrying platform may be tilted or even be rolled over as the road condition changes, and it is very difficult to maintain the stability of the cargo-carrying platform of the luggage cart, therefore the use of the cart is inconvenient.

In addition, since the wheel frame is rigidly connected to the main cart frame, the wheel frame can not be disassembled, thus the cart has a relatively large packaging volume and can not be transported conveniently.

Thus, a technical problem to be solved presently by those skilled in the art is to improve the stability of the two-wheeled luggage cart when traveling on road surfaces such as a slope.

### SUMMARY

An object of the present application is to provide a balanced luggage cart. A cargo-carrying platform of the balanced luggage cart may be maintained in horizontal at all times by operating the balanced luggage cart when traveling on various inclined or bumpy road surfaces, and the balanced luggage cart has a highly reliable stability.

In order to realize the first object, the present application provides a balanced luggage cart, including a wheel, a wheel frame, and a main cart frame, the wheel being mounted below the main cart frame via the wheel frame, and a wheel axle assembly of the balanced luggage cart being connected to a lower end of the wheel frame, wherein the balanced luggage cart further includes a rotating shaft located at a center of the main cart frame, and an upper end of the wheel frame is rotatably connected to the main cart frame via the rotating shaft.

The wheel frame is of an inverted V-shaped structure, and an upper end of a right wheel frame and an upper end of a left wheel frame of the wheel frame are respectively provided with shaft sleeves which are located in a same axis, and the wheel frame is rotatably connected to the rotating shaft via the shaft sleeves.

Each of the right wheel frame and the left wheel frame is of a U-shaped structure, and each of the shaft sleeves is located at two ends of an opening of the U shape.

Preferably, lower ends of the right wheel frame and the left wheel frame are articulated to the wheel axle assembly.

Preferably, a bottom portion of the main cart frame is provided with a locating sleeve, an end of the rotating shaft is provided with a locating head, and the locating head is located in the locating sleeve and is fixed with respect to the locating sleeve via a fastener.

Preferably, the main cart frame is provided with a front stop tube at a front side.

Preferably, the front stop tube is rotatably connected to the main cart frame and has a stretchable angle of 90 degree with respect to a cargo-carrying platform of the main cart frame.

Preferably, the main cart frame is provided with a left stop tube and a right stop tube at a left side and a right side respectively.

Preferably, the right stop tube and the left stop tube are each rotatably connected to the main cart frame and each has a stretchable angle of 90 degree with respect to a cargo-carrying platform of the main cart frame.

Preferably, the main cart frame is provided with a detachable handlebar and a folding supporting leg at a rear side.

Further improvements are made in the present application based on the prior art, the wheel frame of the balanced luggage cart according to the present application is rotatably connected to the main cart frame via a rotating shaft, and the main cart frame is rotatable with respect to the rotating shaft located at a central position. When the luggage cart is traveling on a normal horizontal road surface, the main cart frame rotates to a position parallel to the wheel axle assembly, so as to keep the cart body in a normal horizontal transportation state. When the luggage cart is traveling on a bumpy or sloped road surface, the user may use the adjusting function of the rotating shaft to keep the two wheels in full contact with the road surface, and adjust the main cart frame in a certain range till reaching a horizontal state, and at this time, the cargo-carrying platform of the main cart frame forms an angle with respect to the wheel axle assembly, thereby achieving the object of preventing the tilt or even roll over of the luggage cart. Compared with a conventional luggage cart, the luggage cart in the present application can be operated more smoothly and is labor saving, is more stable when being parked for loading, and won't be rolled over due to the uneven distribution of the heavy cargo s.

### BRIEF DESCRIPTION OF THE DRAWINGS

Figure 1 is a schematic view showing the overall structure of a balanced luggage cart according to an embodiment of the present application;
Figure 2 is a schematic view showing the structure of the balanced luggage cart shown in Figure 1 with a rotating shaft being removed;
Figure 3 is a schematic view showing the structure of the connection between a wheel axle assembly and wheels of the balanced luggage cart shown in Figure 1;
Figure 4 is a schematic view showing the structure of the connection between with a wheel frame and the wheel axle assembly of the balanced luggage cart shown in Figure 1;
Figure 5 is a schematic view showing the structure of the wheel frame shown in Figure 4 in a folded state;
Figure 6 is a schematic view showing the structure of a main cart frame and related components thereof in the balanced luggage cart shown in Figure 1;
Figure 7 is a schematic view showing the structure of the main cart frame shown in Figure 6 with a left stop tube and a right stop tube both in a collapsed state;
Figure 8 is a schematic view showing the structure of the main cart frame shown in Figure 7 with a front stop tube in a collapsed state;
Figure 9 is a schematic view showing the structure of the main cart frame shown in Figure 8 with a supporting leg in a collapsed state;
Figure 10 is a schematic view showing the structure of the main cart frame shown in Figure 9 when disassembling handlebars;
Figure 11 is a schematic view showing the structure of the main cart frame shown in Figure 9 with the handlebars being disassembled;
Figure 12 is a front schematic view of the balanced luggage cart shown in Figure 1 when traveling on a normal horizontal road surface;
Figure 13 is a front schematic view of the balanced luggage cart shown in Figure 1 when traveling on a pitted road surface;
Figure 14 is a front schematic view of the balanced luggage cart shown in Figure 1 when traveling on a raised road surface;
Figure 15 is a front schematic view of the balanced luggage cart shown in Figure 1 when traveling on a leftward-inclined road surface; and
Figure 16 is a front schematic view of the balanced luggage cart shown in Figure 1 when traveling on a rightward-inclined road surface.

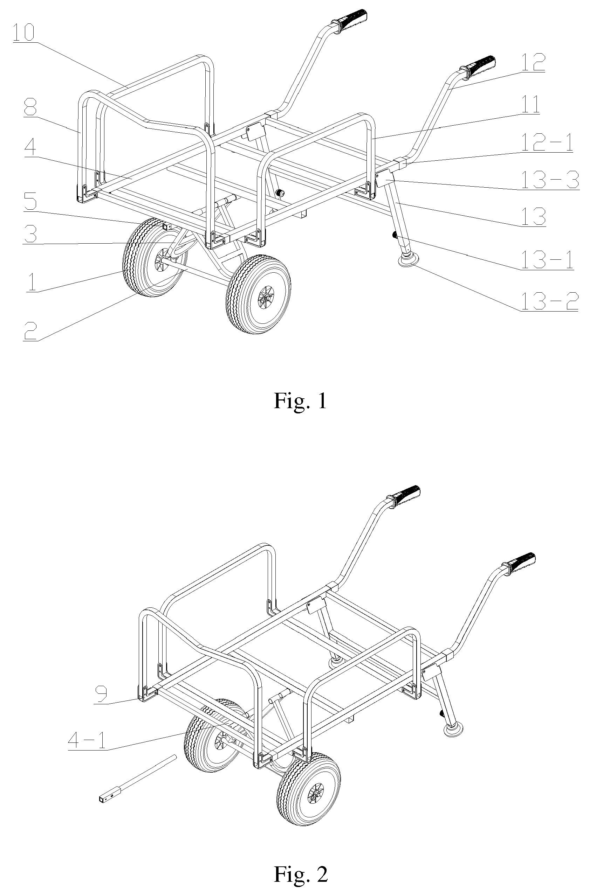

Reference numerals in Figures 1 to 16:

| | | |
|---|---|---|
| 1 wheel, | 2 wheel axle assembly, | 2-1 wheel axle, |
| 2-2 long shaft sleeve, | 3 wheel frame, | 3-1 short shaft sleeve, |
| 3-2 supporting beam, | 4 main cart frame, | 4-1 locating sleeve, |

| | | |
|---|---|---|
| 5 rotating shaft, | 5-1 locating head, | 6 spacer, |
| 7 plug pin, | 8 front stop tube, | 9 rotating connector, |
| 10 left stop tube, | 11 right stop tube, | 12 handlebar, |
| 12-1 locking member, | 13 supporting leg, | 13-1 locking hand wheel, |
| 13-2 universal foot plate, and | 13-3 foot supporter. | |

### DETAILED DESCRIPTION

An object of the present application is improve the connection manner between a wheel frame and a main cart frame so as to enable a luggage cart to have a balance adjusting function, such that the luggage cart may be operated by a user to keep a cargo-carrying platform thereof in horizontal at all times, so as to travel on various inclined and bumpy road surfaces stably.

For those skilled in the art to better understand technical solutions of the present application, the present application will be described in detail in conjunction with drawings and embodiments hereinafter.

Terms indicating the directions and positions, such as "up, down, front and rear", are based on the position relationship of the drawings, and should not be interpreted as absolute limitation to the protection scope of the present application.

Reference is made to Figure 1, which is a schematic view showing the overall structure of a balanced luggage cart according to an embodiment of the present application.

The balanced luggage cart according to an embodiment of the present application mainly includes wheels 1, a wheel axle assembly 2, a wheel frame 3 and a main cart frame 4. The wheels 1 are mounted below the main cart frame 4 via the wheel frame 3, the wheel axle assembly 3 is connected to a lower end of the wheel frame 3, a rotating shaft 5 is arranged at a center of the main cart frame 4, and an upper end of the wheel frame 3 is rotatably connected to the main cart frame 4 via the rotating shaft 5.

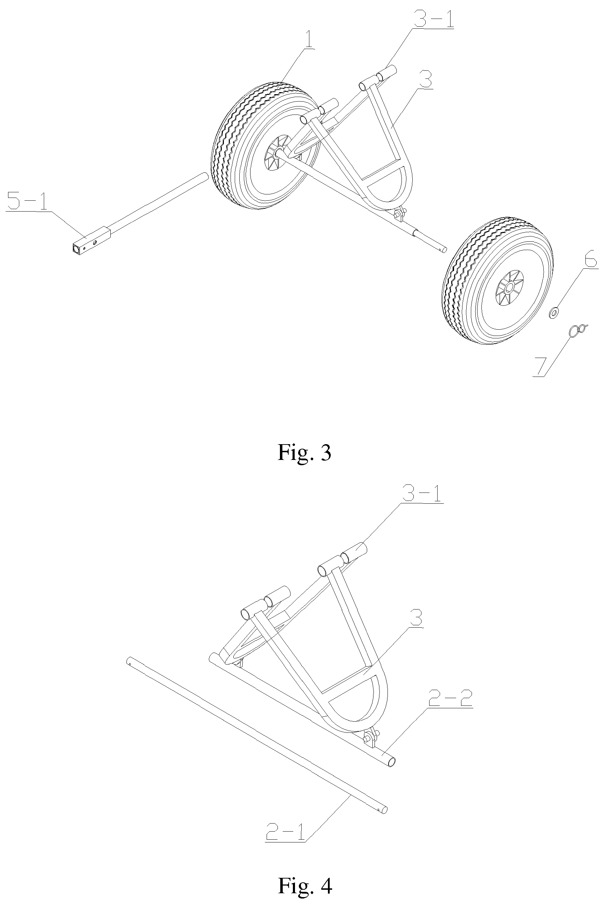

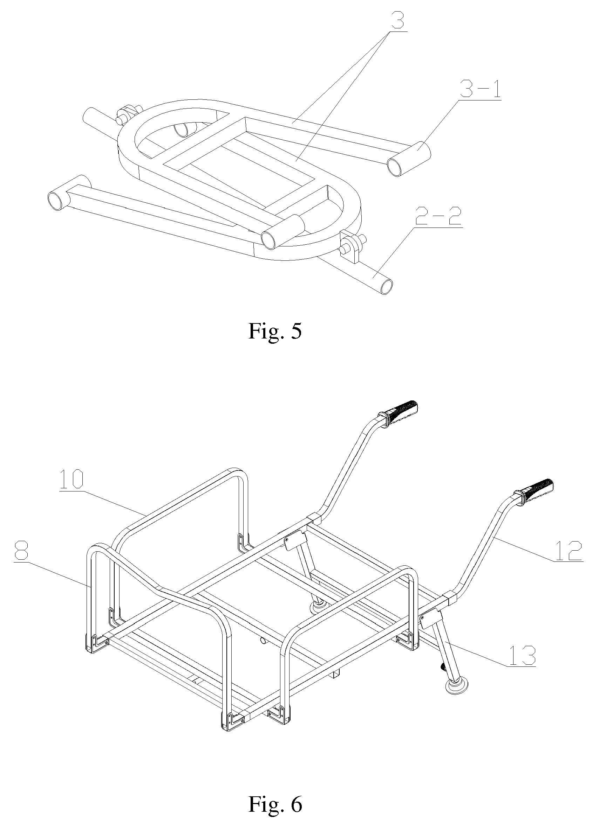

References are made to Figures 2 to 5. Figure 2 is a schematic view showing the structure of the balanced luggage cart shown in Figure 1 with the rotating shaft being removed; Figure 3 is a schematic view showing the structure of the connection between the wheel axle assembly and wheels of the balanced luggage cart shown in Figure 1; Figure 4 is a schematic view showing the structure of the connection between with the wheel frame and the wheel axle assembly of the balanced luggage cart shown in Figure 1; and Figure 5 is a schematic view showing the structure of the wheel frame shown in Figure 4 in a folded state.

There are two wheels 1 respectively arranged at left and right sides and respectively mounted at two ends of the wheel axle assembly 2. The wheel axle assembly 2 includes a wheel axle 2-1 and a long shaft sleeve 2-2 sleeved on the wheel axle. Two ends of the wheel axle 2-1 are each provided with a radial through hole, and after passing through center holes of the wheels 1 respectively, the two ends of the wheel axle 2-1 are each fixed by a spacer 6 and a "figure-8" shaped plug pin 7 passing through the radial through hole.

The wheel frame 3 is of an inverted V-shaped structure, a short shaft sleeve 3-1 is arranged at both of an upper end of a right wheel frame and an upper end of a left wheel frame of the wheel frame 3, and the short shaft sleeves 3-1 are located in a same axis. The wheel frame 3 is rotatably connected to the rotating shaft 5 via the short shaft sleeves 3-1. The left wheel frame and the right wheel frame are each of a U-shaped structure, and the short shaft sleeve 3-1 is located at two ends of an opening of the U shape, and a supporting beam 3-2 is arranged in the opening. A connector at a bottom portion of the wheel frame 3 is articulated to a connector on the long shaft sleeve 2-2 via a pin shaft. In this way, after being disassembled, the left wheel frame and the right wheel frame may be folded and collapsed to an approximately flat state, which may facilitate reducing the transportation volume.

In order to ensure that the short shaft sleeves 3-1 are located in the same axis, the left wheel frame and the right wheel frame are required to be staggered structurally, as shown in Figure 4.

A bottom portion of the main cart frame 4 is provided with a locating sleeve 4-1 having a squared cross section. An end of the rotating shaft 5 is provided with a locating head 5-1 having a squared cross section. During the assembly, the rotating shaft 5 is passed through the locating sleeve 4-1 and the short shaft sleeves 3-1 in sequence from front to back so as to connect the wheel frame 3 to the main cart frame 4. Finally, the locating head 5-1 at a front end of the rotating shaft 5 is inserted in the locating sleeve 4-1 and is fixed with respect to the locating sleeve 4-1 via a fastener, such as a bolt or a plug pin, and a rear end of the rotating shaft 5 is extended into a shaft sleeve fixed at the bottom portion of the main cart frame 4.

The specific structure of the wheel frame is not limited herein, and wheel frames which can be rotatably connected to the main cart frame via a rotating shaft may all be used to realize the object of the present application.

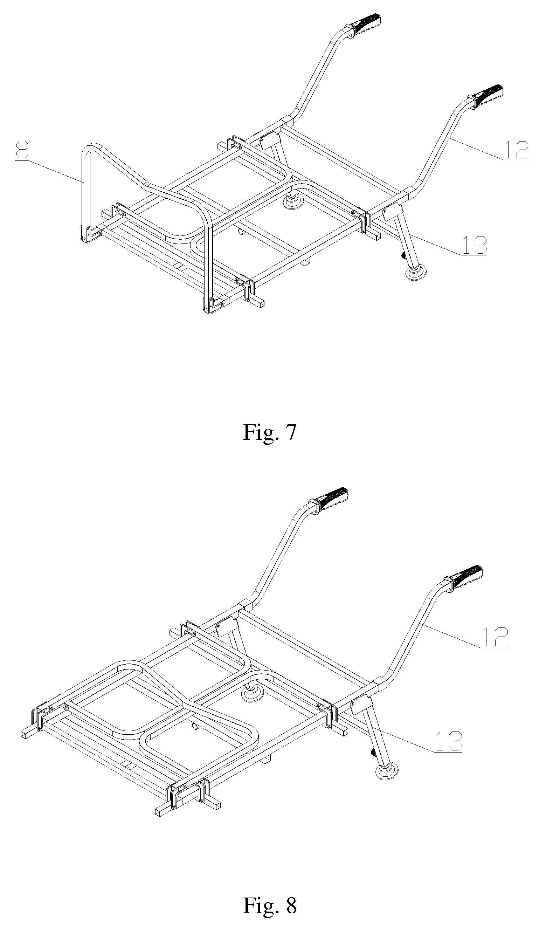

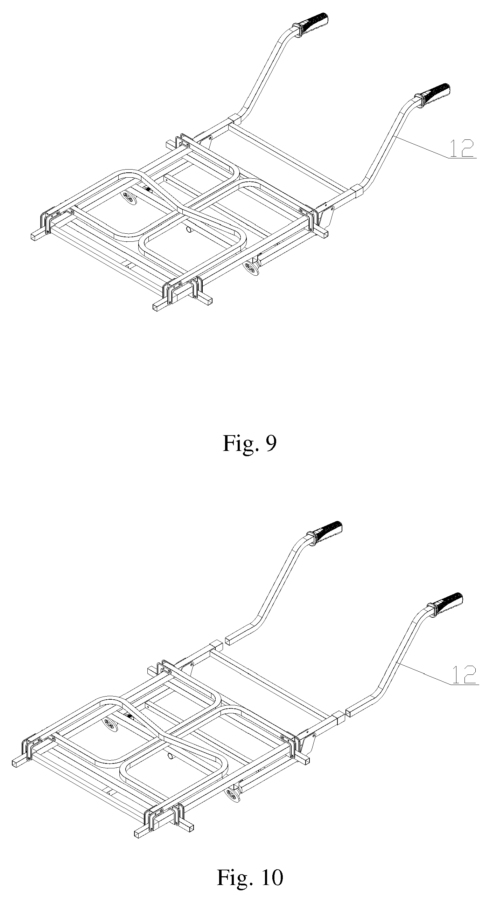

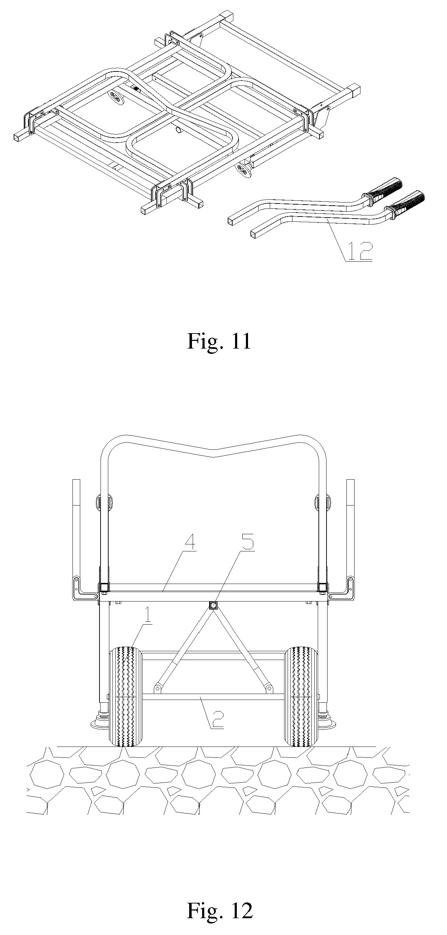

References are made to Figures 6 to 11. Figure 6 is a schematic view showing the structure of the main cart frame and related components thereof in the balanced luggage cart shown in Figure 1; Figure 7 is a schematic view showing the structure of the main cart frame shown in Figure 6 with a left stop tube and a right stop tube both in a collapsed state; Figure 8 is a schematic view showing the structure of the main cart frame shown in Figure 7 with a front stop tube in a collapsed state; Figure 9 is a schematic view showing the structure of the main cart frame shown in Figure 8 with a supporting leg in a collapsed state; Figure 10 is a schematic view showing the structure of the main cart frame shown in Figure 9 when disassembling handlebars; and Figure 11 is a schematic view showing the structure of the main cart frame shown in Figure 9 with the handlebars being disassembled.

As shown in the Figures, the main cart frame 3 is of a rectangular frame structure, has three transversal beams arranged inside the frame, and a front stop tube 8 arranged at a front side. The front stop tube 8 is rotatably connected to the main cart frame via a rotating connector 9, and can be stretched to form an angle of 90 degree with respect to a cargo-carrying platform of the main cart frame 4.

The main cart frame 3 is provided with a right stop tube 11 and a left stop tube 10 at a left side and a right side respectively. The right stop tube 11 and the left stop tube 10 are each rotatably connected to the main cart frame 3 via a rotating connector 9, and can each be stretched to form an angle of 90 degree with respect to the cargo-carrying platform of the main cart frame 3.

The main cart frame 3 is provided with a detachable handlebar 12 and a folding supporting leg 13 at a rear side. A tube member at a front end of the handlebar 12 is inserted into a tube member of the main cart frame 3 and then is fixed via a handlebar locking member 12-1. The supporting leg 13 has a telescopic function, and may be fixed via a locking hand wheel 13-1 after being adjusted. A bottom portion of the supporting leg 13 is provided with a universal foot plate 13-2, so as to accommodate various road conditions. An upper end of the supporting leg 13 is rotatably connected to the main cart frame 3 via a foot supporter 13-3 and can be folded forwards.

After being disassembled, the front stop tube 8, the left stop tube 10 and the right stop tube 11 may be folded and collapsed on the main cart frame 3, and the supporting leg 13 may be folded and collapsed under the main cart frame 3, so as to form an approximately flat state, such that the transportation volume is reduced effectively, and the handlebar 12 may be disassembled entirely.

Apparently, the above balanced luggage cart is only a preferred embodiment, the specific structure thereof is not limited herein, and specific adjustments may be made according to practical requirements based on the above embodiment. There are various implementing embodiments, which will not be enumerated herein for simplicity.

An operating principle of the balanced luggage cart will be described in detail hereinafter.

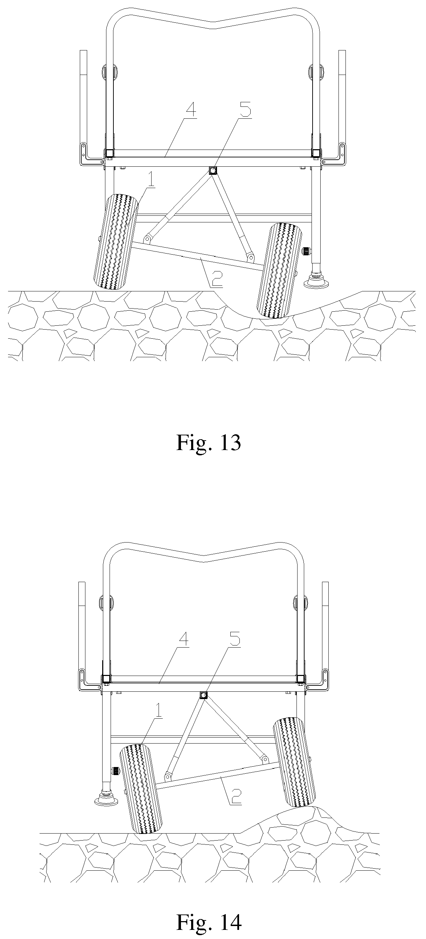

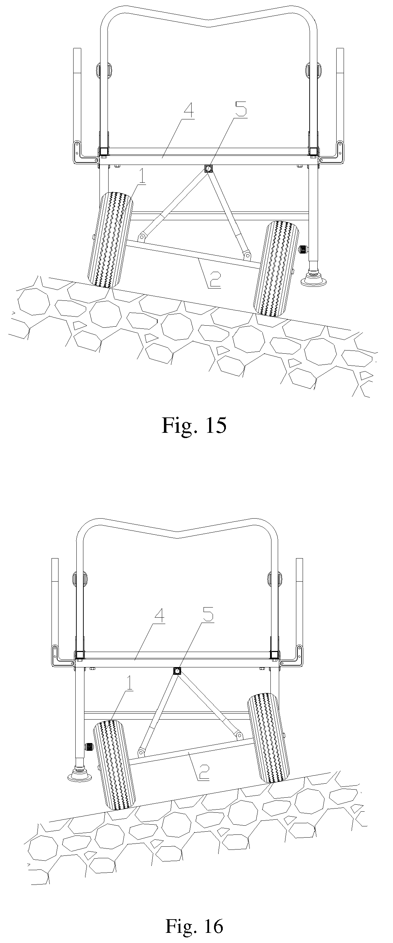

References are made to Figures 12 to 16. Figure 12 is a front schematic view of the balanced luggage cart shown in Figure 1 when traveling on a normal horizontal road surface; Figure 13 is a front schematic view of the balanced luggage cart shown in Figure 1 when traveling on a pitted road surface; Figure 14 is a front schematic view of the balanced luggage cart shown in Figure 1 when traveling on a raised road surface; Figure 15 is a front schematic view of the balanced luggage cart shown in Figure 1 when traveling on a leftward-inclined road surface; and Figure 16 is a front schematic view of the balanced luggage cart shown in Figure 1 when traveling on a rightward-inclined road surface.

When the luggage cart is traveling on a normal horizontal road surface, the main cart frame 4 rotates to a position parallel to the wheel axle assembly 2, so as to keep the cart body in a normal horizontal transportation state. When the luggage cart is traveling on a bumpy or sloped road surface, the user may use the adjusting function of the rotating shaft 5 to keep the two wheels 1 in full contact with the road surface, and adjust the main cart frame 4 in a certain range till reaching a horizontal state, and at this time, the cargo-carrying platform of the main cart frame 4 forms an angle with respect to the wheel axle assembly 2, thereby achieving the object of preventing the tilt or even roll over of the luggage cart. Compared with a conventional luggage cart, the luggage cart in the present application can be operated more smoothly and is labor saving, is more stable when being parked for loading, and won't be rolled over due to the uneven distribution of the heavy cargos.

The balanced luggage cart according to the present application is described in detail hereinbefore. The principle and the embodiments of the present application are illustrated herein by specific examples. The above description of examples is only intended to help the understanding of the present application. It should be noted that, for the person skilled in the art, many modifications and improvements may be made to the present application without departing from the principle of the present application, as defined in the claims, and these modifications and improvements are also deemed to fall into the protection scope of the present application defined by the claims.

## Claims

1. A balanced luggage cart, comprising a wheel (1), a wheel frame (3), and a main cart frame (4), the wheel (1) being mounted below the main cart frame (4) via the wheel frame (3), and a wheel axle assembly (2) of the balanced luggage cart being connected to a lower end of the wheel frame (3), wherein the balanced luggage cart further comprises a rotating shaft (5) located at a center of the main cart frame (4), and an upper end of the wheel frame (3) is rotatably connected to the main cart frame (4) via the rotating shaft (5);
wherein an upper end of a right wheel frame and an upper end of a left wheel frame of the wheel frame (3) are respectively provided with shaft sleeves which are located in a same axis, and the wheel frame (3) is rotatably connected to the rotating shaft (5) via the shaft sleeves; and
**characterized in that** the wheel frame (3) is of an inverted V-shaped structure, each of the right wheel frame and the left wheel frame is of a U-shaped structure, and each of the shaft sleeves is located at two ends of an opening of the U shape.

2. The balanced luggage cart according to claim 1, wherein lower ends of the right wheel frame and the left wheel frame are articulated to the wheel axle assembly (2).

3. The balanced luggage cart according to any one of claims 1 to 2, wherein a bottom portion of the main cart frame (4) is provided with a locating sleeve (4-1), an end of the rotating shaft (5) is provided with a locating head (5-1), and the locating head (5-1) is located in the locating sleeve (4-1) and is fixed with respect to the locating sleeve (4-1) via a fastener.

4. The balanced luggage cart according to any one of claims 1 to 2, wherein the main cart frame (4) is provided with a front stop tube (8) at a front side.

5. The balanced luggage cart according to claim 4, wherein the front stop tube (8) is rotatably connected to the main cart frame (4) and has a stretchable angle of 90 degrees with respect to a cargo-carrying platform of the main cart frame (4).

6. The balanced luggage cart according to any one of claims 1 to 2, wherein the main cart frame (4) is provided with a left stop tube (10) and a right stop tube (11) at a left side and a right side, respectively.

7. The balanced luggage cart according to claim 6, wherein the right stop tube (11) and the left stop tube (10) are each rotatably connected to the main cart frame (4) and each has a stretchable angle of 90 degrees with respect to a cargo-carrying platform of the main cart frame (4).

8. The balanced luggage cart according to any one of claims 1 to 2, wherein the main cart frame (4) is provided with a detachable handlebar (12) and a folding supporting leg (13) at a rear side

## Patentansprüche

1. Ausgeglichener Gepäckwagen umfassend ein Rad (1), ein Radgestell (3), und ein Hauptwagengestell (4), wobei das Rad (1) unterhalb des Hauptwagengestells (4) durch das Radgestell (3) montiert ist und ein Radachsenaggregat (2) des ausgeglichenen Gepäckwagens an einem unteren Ende des Radgestells (3) befestigt ist, wobei der ausgeglichene Gepäckwagen zudem eine auf einem Mittelpunkt des Hauptwagengestells (4) befindliche rotierende Welle (5) umfasst, und ein oberes Ende des Radgestells (3) mit dem Hauptwagengestell (4) über die rotierende Welle (5) rotierbar verbunden ist;
wobei ein oberes Ende des rechten Radgestells und ein oberes Ende des linken Radgestells bezogen auf das Radgestell (3) jeweils mit auf derselben Achse befindlichen Wellenschutzhülsen versehen sind und das Radgestell (3) mit der rotierenden Welle (5) über die Wellenschutzhülsen rotierbar verbunden ist; und
**dadurch gekennzeichnet, dass** das Radgestell (3) die Form eines umgedrehten V aufweist, das rechte Radgestell und das linke Radgestell jeweils eine U-Form aufweisen und die Wellenschutzhülsen sich jeweils am Ende einer Öffnung der U-Form befinden.

2. Ausgeglichener Gepäckwagen nach Anspruch 1, wobei die unteren Enden des rechten Radgestells und des linken Radgestells mit dem Radachsenaggregat (2) gelenkig verbunden sind.

3. Ausgeglichener Gepäckwagen nach einem der Ansprüche 1 bis 2, wobei der untere Teil des Hauptwagengestells (4) mit einer Rasthülse (4-1) versehen ist, ein Ende der rotierenden Welle (5) mit einem Rastkopf (5-1) versehen ist und der Rastkopf (5-1) sich in der Rasthülse (4-1) befindet und bezüglich der Rasthülse (4-1) mittels eines Befestigungsmittels befestigt ist.

4. Ausgeglichener Gepäckwagen nach einem der Ansprüche 1 bis 2, wobei das Hauptwagengestell (4) mit einem vorderen Sperrrohr (8) an einer Vorderseite versehen ist.

5. Ausgeglichener Gepäckwagen nach Anspruch 4, wobei das vordere Sperrrohr (8) mit dem Hauptwagengestell (4) rotierbar verbunden ist und einen dehnbaren Winkel von 90 Grad hinsichtlich einer Gepäck tragenden Plattform des Hauptwagengestells (4) aufweist.

6. Ausgeglichener Gepäckwagen nach einem der Ansprüche 1 bis 2, wobei das Hauptwagengestell (4) auf der linken Seite bzw. der rechten Seite mit einem linken Sperrrohr (10) bzw. einem rechten Sperrrohr (11) versehen ist.

7. Ausgeglichener Gepäckwagen nach Anspruch 6, wobei das rechte Sperrrohr (11) und das linke Sperrrohr (10) jeweils rotierbar mit dem Hauptwagengestell (4) verbunden sind und jeweils einen dehnbaren Winkel von 90 Grad hinsichtlich einer Gepäck tragenden Plattform des Hauptwagengestells (4) aufweisen.

8. Ausgeglichener Gepäckwagen nach einem der Ansprüche 1 bis 2, wobei das Hauptwagengestell (4) mit einer abnehmbaren Lenkstange (12) und einem zusammenklappbaren Standbein (13) an einer Rückseite versehen ist.

## Revendications

1. Un chariot à bagages équilibré comprenant une roue (1), un châssis de roue (3) et un châssis de chariot principal (4), la roue (1) étant montée au dessous du châssis de chariot principal (4) par le châssis de roue (3), et un assemblage d'essieu de roue (2) du chariot à bagages équilibré étant connecté à une extrémité inférieure du châssis de roue (3), dans lequel le chariot à bagages équilibré comprend en outre un arbre tournant (5) situé dans un centre du châssis de chariot principal (4) et une extrémité supérieure du châssis de roue (3) est connectée rotativement au châssis de chariot principal (4) par l'arbre tournant (5) ;
dans lequel une extrémité supérieure du châssis de roue droit et une extrémité supérieure du châssis de roue gauche du châssis de roue (3) sont respectivement pourvues de chemises d'arbre qui sont situées dans le même axe et le châssis de roue (3) est connecté rotativement à l'arbre tournant (5) par les chemises d'arbre ; et
**caractérisé en ce que** le châssis de roue (3) présente une structure de V inversé, le châssis de roue droit et le châssis de roue gauche respectivement présentent une structure d' U et les chemises d'arbre sont chacune situées à l'extrémité d'une ouverture de la structure d'U.

2. Le chariot à bagages équilibré selon la revendication 1, dans lequel des extrémités inférieures du châssis de roue droit et du châssis de roue gauche sont articulées avec l'assemblage d'essieu de roue (2).

3. Le chariot à bagages équilibré selon l'une quelconque des revendications 1 à 2, dans lequel une partie inférieure du châssis de chariot principal (4) est pourvue d'un contact douille-cliquet (4-1), une extrémité de l'arbre tournant (5) est pourvue d'un contact douille de tête (5-1) et le contact douille de tête (5-1) est situé dans le contact douille-cliquet (4-1) et est fixé par rapport au contact douille-cliquet (4-1) par un élément de fixation.

4. Le chariot à bagages équilibré selon l'une quelconque des revendications 1 à 2, dans lequel le châssis de chariot principal (4) est pourvu d'un tuyau d'arrêt frontal (8) sur un côté frontal.

5. Le chariot à bagages équilibré selon la revendication 4, dans lequel le tuyau d'arrêt frontal (8) est connecté rotativement au châssis de chariot principal (4) et présente un angle extensible de 90 degrés par rapport à une plate-forme transportant du fret du châssis de chariot principal (4).

6. Le chariot à bagages équilibré selon l'une quelconque des revendications 1 à 2, dans lequel le châssis de chariot principal (4) est pourvu d'un tuyau d'arrêt gauche (10) et d'un tuyau d'arrêt droit (11) sur le côté gauche et droit respectivement.

7. Le chariot à bagages équilibré selon la revendication 6, dans lequel le tuyau d'arrêt droit (11) et le tuyau d'arrêt gauche (10) sont chacun connectés rotativement au châssis de chariot principal (4) et chacun présente un angle extensible de 90 degrés par rapport à une plate-forme transportant du fret du châssis de chariot principal (4).

8. Le chariot à bagages équilibré selon l'une quelconque des revendications 1 à 2, dans lequel le châssis de chariot principal (4) est pourvu d'un guidon détachable (12) et d'une jambe de support pliante (13) sur le côté arrière.
